# EUROPEAN PATENT SPECIFICATION

(11) **EP 1 579 985 B1**
(45) Date of publication and mention of the grant of the patent: **03.12.2008**
(21) Application number: 05102196.2
(22) Date of filing: 18.03.2005
(51) Int. Cl.: B29D 30/54, B60C 11/24

(54) **Method of retreading a tire having a detectable carcass cushion layer**
Reifenrunderneuerung eines Luftreifens mit einer sichtbar werdenden Puffermaterialschicht
Procédé de rechapage d'un pneumatique ayant une couche de liaison détectable

(30) Priority: 24.03.2004 US 556135 P
(43) Date of publication of application: 28.09.2005
(73) Proprietor: The Goodyear Tire & Rubber Company, Akron, OH 44316-0001 (US)
(72) Inventor: Majumdar, Ramendra Nath, Hudson, OH 44236 (US); Ueyoko, Kiyoshi, Akron, OH 44333 (US); Vermaat, Piet, 9168 Mertzig (LU)
(74) Representative: Kutsch, Bernd

(56) References cited:
- EP-A- 0 496 202
- DE-A1- 19 733 620
- GB-A- 2 347 393
- GB-A- 2 375 743
- US-A- 3 675 375
- US-A- 6 044 882
- US-A1- 2004 079 459
- US-A1- 2004 084 120

## Description

### Field of the Invention

This invention relates to a method of retreading a cured tire which contains a non-black colored rubber carcass cushion layer sandwiched between its tire tread and tire casing. The non-black colored rubber carcass cushion layer acts both as an adhesive and transition layer for adhering a cured or uncured tire tread to the cured tire carcass. Such carcass cushion layer also acts as a detectable color indicator for indexing and monitoring a complete removal (e.g. by buffing, abrading, or cutting) of the circumferential rubber tire tread and partial removal of the carcass cushion layer without removing the entire carcass cushion layer. The invention also relates to a method of retreading a cured rubber tire carcass by completely removing a circumferential, carbon black reinforced (and therefor a black colored) tire rubber tread together with a partial removal of the contrastingly colored cured rubber carcass cushion layer to a depth indexed and/or determined by an automated rubber cushion layer color sensing means, or apparatus, followed by applying a non-black colored uncured circumferential rubber carcass cushion layer and carbon black reinforced (therefore black colored) tire tread thereon to form an assembly thereof and vulcanizing the assembly in a suitable mold to form a retread tire.

### Background of the Invention

Various colored tread wear indicators have been proposed for tire treads to visually indicate when a tire tread is sufficiently worn away so that the tire's useful tread life has been met. For example, US-A-6,220,199 and 3,814,160.

However, for retreading of tires, it is desired to completely abrade away the tread so that such colored tread wear indicators are considered herein to be inappropriate for the retreading of tires.

Cord reinforced rubber plies underlying the tire tread have been proposed and sometimes used to aid a retreader in visually determining the degree of buffing away the tread in preparation for a tire retreading operation (e.g. the tread is buffed away until the cords of the aforesaid underlying rubber ply is detected). For example, US-A-5,088,538 and 4,454,903.

However, it is desired herein to provide an improvement over such tire retread preparation process.

It is envisioned by this invention to create and utilize a non-black colored color indicator in a form of a rubber cushion layer beneath and underlying the tire tread which can be visually and/or electronically detected and utilized to index and/or otherwise control the depth of rubber removal from the tire without having to guess the degree of complete tread removal by relying upon a tread wear indicator positioned within the tread or to speculate a degree of cushion layer removal by looking for an appearance of a cord reinforced ply positioned beneath the tread.

The uncured carcass cushion rubber layer is in a nature of a laminate which may be individually applied to an uncured or cured tire carcass or applied to an uncured tire tread strip or, alternately, laminated to an uncured tread strip as the tread strip is being extruded to shape and contour the tread strip. It is to be appreciated that the tread strip itself may be of a co-extruded cap/base configuration where the carcass cushion rubber layer is laminated to the base layer of the cap/base configured tread strip.

In practice, various tires are sometimes retreaded to replace their existing worn tread with a new tread. For example, aircraft tires and some heavy duty truck tires are sometimes retreaded. For the retreading operation, the existing tread, along with (if any) an underlying circumferential reinforcing belt and rubber cushion layer, is conventionally ground, or cut, away to reveal an underlying carcass which may be composed of a plurality of cord reinforced rubber layers, or plies. A new tire tread is then usually applied to the prepared tire carcass with a cushion rubber layer positioned between the tread and tire carcass as a transition layer between the tire carcass and new tire tread.

If desired, a cord reinforced rubber ply is positioned between the tire tread and carcass cushion layer in order, for example, to added stability to the tire tread/carcass cushion layer composite.

The resulting assembly is then suitably cured to provide the retreaded tire.

In practice, it is desired that a portion of the tire carcass itself is not unnecessarily ground or cut away so that the integrity of the original tire carcass is largely preserved and to thereby promote an opportunity for the retreading of the tire.

Accordingly, it is desirable to provide a means of advantageously identifying a limitation or extent of such grinding, or cutting, in a manner which can be suitably indexed, or robotically administered by a contrasting color sensitive apparatus to effectively control such tread removal operation in combination with providing a suitable cushion/adhesive rubber layer for a retreaded tire.

In US-A-5,503,940, a carbon black reinforced (black colored) cushion layer for retreading a tire is used with built-in tack for which an application of a tack enhancing cement to the buffed tire carcass was not needed. A bis-imide was used in the cushion composition to provide resistance to blow-outs (formation of voids in the rubber) due to internal heat generation during use and operation of the retreaded tire.

Subsequently, US-A-6,186,202 also provided a rubber cushion layer for use in the retreading of a tire in which a dispersion of a particulate silica in the rubber cushion layer is used to retard or prevent blow-outs (formation of internal voids with the rubber composition) due to lower internal heat generation of during use and operation of the retreaded tire. Such blow-outs are evidenced by small voids formed in the rubber composition and are a known phenomenon to those having skill in such art.

However, consistent and convenient detection, and/or indexing of the degree of removal of the rubber cushion layer is not readily accomplished for such aforesaid black colored cushion layers.

For this invention, the rubber carcass cushion layer preferably contains an amorphous silica (preferably precipitated silica), reinforcing filler, carbon black-free silica coupling agent, pigment colorant for the carcass cushion rubber of a color other than black and which contains less than 0.5 phr of and is preferably exclusive of, carbon black so that the carbon black itself does not unnecessarily blacken the rubber composition. The non-black colored rubber carcass cushion layer composition preferably also contains a titanium dioxide pigment, which may constitute said pigment colorant, and which promotes a high degree of color contrast and tends to prevent or retard discoloration of the rubber cushion layer upon aging. The adhesive non-black colored rubber carcass cushion layer is adhered to a cured or uncured tire tread and buffed cured tire casing, or carcass, without the need of a cement.

The term "phr" where used herein means "parts per weight of a specified material per 100 parts by weight rubber, or elastomer, in a rubber composition".

EP-A- 0 496 202 describes a method of retreading a pneumatic rubber tire wherein a non-black colored rubber carcass cushion layer is underlying the tread.

DE A 197 33 620 describes a non-black layer which is part of the tread and which appears at a non-skid depth of 1.6 mm. Further tread wear indicators in the form of a non-black colored layer being exposed when the tread of the tire is worn out are described in GB-A- 2 375 7434 and GB-A- 2 347 393.

### Summary and Practice of the Invention

In accordance with this invention, a method according to claim 1 is provided.

A particular embodiment of the invention is defined in claim 2.

In practice, said non-black colored intermediate transition rubber carcass cushion laminate, or layer, by the nature of its non-black color, provides a color based monitoring means for controlling a subsequent removal (e.g. by abrading grinding, buffing and/or cutting away) of the entire cured rubber tread and partial removal of said carcass cushion laminate, or layer.

One or more (usually from 1 to 3) circumferential cord reinforced rubber ply (plies) is (are) positioned between said tire tread and said carcass cushion layer, or laminate.

Said tire tread is of a co-extruded cap/base configuration with an outer cap rubber layer having a running surface for said tire and an underlying tread base rubber which is not (is exclusive of) said carcass cushion rubber layer.

Therefore, a significant aspect of the invention is an enablement of one aspect of said method of retreading a tire by removal (e.g. by abrading, grinding, buffing and/or cutting away) the entire circumferential black colored rubber tire tread followed by a combination of sensing the underlying non-black colored carcass cushion layer as an intermediate laminated (not co-extruded) layer positioned between said circumferential black colored rubber tread and said black colored rubber tire carcass and controlling the degree (e.g. the depth) of partial removal of a portion of said non-black colored carcass cushion layer in a manner to prevent a complete removal of said carcass cushion layer.

In practice, the rubber composition of said carcass cushion layer is comprised of at least one diene-based elastomer, reinforcing filler as a precipitated silica, carbon black-free coupling agent for said silica and a pigment based non-black colorant comprised of titanium dioxide inorganic pigment and wherein said rubber composition is exclusive of carbon black.

In the description, the non-black colored cushion layer is referred to herein as a carcass cushion layer since it is a laminate which is significantly aligned with the carcass casing in a manner that it seems appropriate to not refer to it as a tire tread base layer since it is not co-extruded with the tire tread.

### Brief Description of the Drawing

FIG 1 is provided as a partial cross-section of a tire depicting a laminate of an uncured tire tread, cured tire carcass and a white colored rubber carcass cushion layer positioned therebetween.
FIG 2 is provided as a partial cross-section of the tire of FIG 1, wherein the assembly of the tire tread layer, carcass cushion layer and tire carcass has been cured.
FIG 3 and FIG 3A depict a partial tire retreading operation for a worn tire tread partial cross-section.

### The Drawings

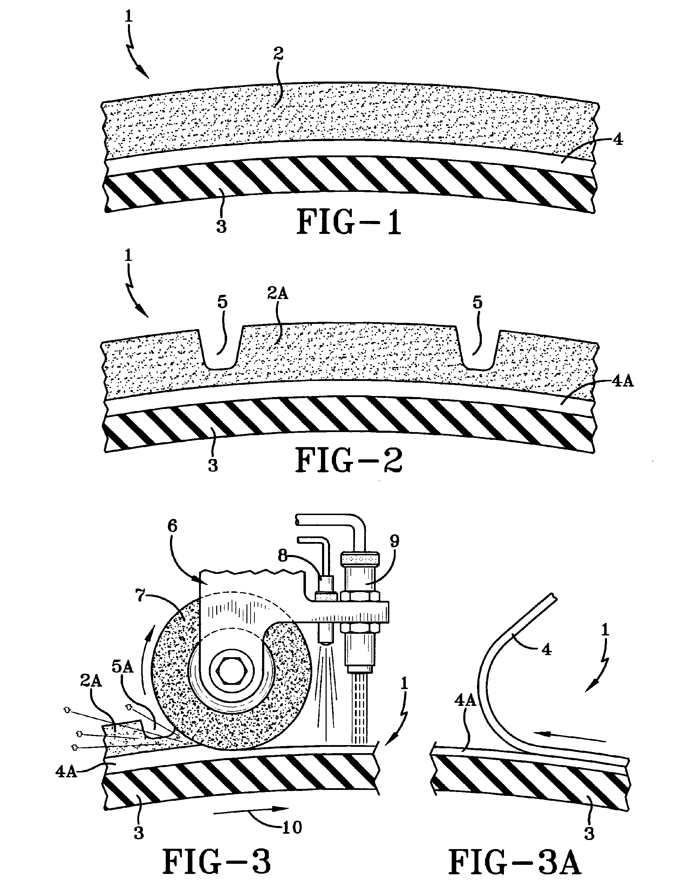

In FIG 1, a partial cross-section of a tire 1 is depicted which is comprised of a laminate of a carbon black reinforced, black colored, cured rubber carcass 3, a circumferential uncured carbon black reinforced, black colored tread layer 2 and an underlying circumferential non carbon black-containing, silica reinforced and titanium dioxide-containing white colored uncured rubber carcass cushion layer 4 positioned between said tread layer 2 and said tire carcass 3.

In FIG 2, a partial cross-section of the tire 1 of FIG 1 is depicted where said laminate, or assembly of laminae, has been cured in a suitable mold at an elevated temperature to so that the tread 2A is cured with a configuration of lugs and grooves 5 with the cured intermediate rubber carcass cushion layer 4A cured located between said cured tread 2A and tire carcass 3.

In FIG 3, a partial simplified retreading operation is depicted in which the tire is rotated in direction 10 while a cylinder with a plurality of cutting blades, illustrated however in FIG 3 as a grinding wheel 7, which in practice may be a wheel on which a plurality of metal cutting blades of a multiplicity of different orientations are mounted, is applied by a suitable means 6 against the worn cured rubber tire tread 2A as evidenced by a reduced tread groove depth 5A to remove all of the tread 2A and a partial removal of a portion, but not all, of the cured carcass cushion layer 4A to a controlled depth administered by a cooperative combination of sensing color sensing means 8 which senses the contrastingly white colored carcass cushion layer 4A and depth of carcass cushion layer removal determining means 9 which controls the depth of partial removal (e.g. by grinding or cutting away) the cured carcass cushion layer 4A to prevent the carcass cushion layer from being completely removed and thereby prevent the radially outer surface of the tire carcass 3 from being exposed.

FIG 3A illustrates application of an additional fresh, uncured white colored rubber carcass cushion layer 4 over the radially outer surface of the partially removed white colored cured carcass cushion layer 4A to form a carcass cushion layer laminae of the two layers, following which a circumferential uncured, carbon black reinforced, black-colored, rubber tread layer (not shown) is applied to the radially outer surface of the additional uncured carcass cushion layer form a retreaded tire assembly (not shown). The tire assembly is then molded and cured in a suitable mold at an elevated temperature to form the retreaded tire (not shown).

In one aspect of the practice of the invention, an inherently tacky rubber carcass cushion layer (via a tackifying resin such as a phenolic resin inclusion in its uncured rubber composition) is adhered directly to the tire casing without the need of application of a tack enhancing cement to the cushion layer itself so that an intervening coating, or layer, of an adhesive, or cement, or other bonding layer, is not utilized.

Representative of such conjugated diene-based elastomers for use in the tire carcass, carcass cushion layer and circumferential rubber tread are various combinations of elastomers such as, for example polymers and copolymers of dienes of at least one of isoprene and 1,3-butadiene and copolymers of styrene and at least one of isoprene and 1,3-butadiene. Such elastomers are generally blended with various compounding ingredients such as, for example, reinforcing fillers as hereinbefore discussed, zinc oxide, stearic acid, sulfur, accelerators, antioxidants, antiozonants and the like in conventional amounts.

Representative of such elastomers are, for example, cis-1,4-polyisoprene, cis-1,4-polybutadiene and styrene-butadiene rubbers and blends thereof.

Representative of such elastomer blends for said cushion layer are, for example, elastomer blends comprised of 15 to 70, alternatively from 30 to 50, phr of natural cis-1,4-polyisoprene rubber and, correspondingly, from 30 to 85, alternately 50 to 70, phr of cis-1,4-polybutadiene rubber.

An important aspect of the present invention is the use of synthetic amorphous silica, preferably precipitated silica, as a reinforcing agent which may be used in an amount of, for example, from 25 to 80, alternately 40 to 60 phr.

A silica coupling agent is used which has a moiety which is reactive with hydroxyl groups (e.g. silanol groups) contained on the silica, particularly precipitated silica and another moiety which is interactive with said diene-based elastomer(s). For example, a suitable coupling agent may be a bis(3-trialkoxysilylalkyl) polysulfide having from 2 to 8 sulfur atoms, with an average of from 2 to 4 sulfur atoms in its polysulfidic bridge, exemplary is a bis(3-triethoxysilylpropyl) polysulfide. Other coupling agents may be, for example, organoalkoxymertaptosilanes such as for example, mercaptopropyltrimethoxysilane, and mercaptopropyltriethoxysilane. The amount of the sulfur-containing alkylene alkoxy silane compounds of the present invention may vary, for example, from 0.01 to 0.2 weight percent of the silica. The coupling agent is used without (exclusive of) a carbon black carrier so that the cushion layer may be on a non-black color.

An example of a coupling agent is carbon black-free Si266™ from Degussa AG as bis-(3-triethoxysilylpropyl) polysulfide having an average of 2.2 connecting sulfur atoms in its polysulfidic bridge.

The adhesive carcass cushion layer for the invention is normally desired to have a built-in or inherent tack and therefore can be combined with the carcass and the tread without the need of additional cement. In practice, the carcass cushion layer is therefore desirably intended to be applied in an essentially a solventless form, that is, substantially free of solvent inasmuch as they generally have five parts by weight or less, desirably three, two, or one parts by weight or less, and preferably nil, i.e., completely free, of any volatile organic compounds (VOC), per 100 parts by weight of rubber (phr).

In addition to the rubber, silica, and the coupling agent, the rubber composition of the carcass cushion layer can optionally but preferably include one or more compatible tackifying agents which are utilized in an effective amount to promote good tack (e.g., pressure sensitive tack) with vulcanized elastomeric substrates and also with uncured, vulcanizable elastomeric substrates (i.e. non-vulcanized or at least substantially non-vulcanized). Hence, it is intended that the carcass cushion layer can be applied wrinkle free to a buffed tire casing. Various tackifying resins which can be utilized are generally well known to the art and in the literature which generally include rosin and its derivatives and various hydrocarbon resins. The rosin group comprises rosins, modified rosins and their various derivatives such as esters. The hydrocarbon resin group comprises polyterpines, synthetic hydrocarbon resins, and various modified or special resins which are primarily phenolics. Examples of rosin tackifiers include gum rosin, wood rosin, tall oil rosin, and the like. Such rosins are generally a mixture of organic acids and often referred to as rosin acids. Minor components in the rosin resin include rosin esters and anhydrides, unsaponifiable matter, and fatty acids. The rosin acids can be divided into two different groups, abietic acid type and primaric acid type. The various rosin acids can be reacted with a variety of alcohols to form esters thereof.

Hydrocarbon tackifier resins are low molecular weight polymers derived from crude monomer streams. Steams can be obtained from wood, coal, or petroleum sources. Hydrocarbon resin streams can be classified as containing primarily aromatic, aliphatic, and diene (cyclic olefin) monomers. Polymerization of such streams is generally carried out using a Lewis acid catalyst or by a free-radical process using heat and pressure. The aromatic hydrocarbon resins generally contain aromatic petroleum resins and resins from coal tar, commonly called coumarone-indene resins. The various aliphatic hydrocarbon resins are produced from light, so called carbon-5 petroleum fractions wherein the principal monomers are cis- and trans-piperylene. Other hydrocarbon resins include mixed aliphatic-aromatic resins as well as terpene resins.

Preferred tackifiers are phenol-formaldehyde resins, although other rubber tackifiers can be used in combination or as a substitute therefor. Details of such tackifiers may be found, for example, in the Handbook of Pressure Sensitive Adhesive Technology, edited by Donatas Satas, Van Nostrand Reinhold Company, 1982, Chapter 16, Pages 353 through 369.

Thus, a preferred type of tackifier is represented by various phenol-formaldehyde resins. Such resins generally have a number average molecular weight of 2,000 or less. Typically, alkyl phenols are used rather than phenol itself since the alkyl group improves the miscibility of the resin with the rubber. Thus, alkyl groups having from 1 to 15 carbon atoms such as butyl, octyl, and nonyl, have been attached to the phenolic nucleus. The manufacture of phenolic resins generally include the condensation of the alkyl phenol with formaldehyde to produce the phenolic resins. Since the phenol has three reactive positions, it will form insoluble resins when more than one mole of formaldehyde is used per mole of phenol. When low ratios of formaldehyde are used, tackifiers are formed. The existence of phenol-formaldehyde tackifiers are well known to the art and to the literature, e.g., "Resins Used in Rubbers" by Paul O. Powers, Rubber Chemistry and Technology, Vol. 36, Pages 1542 through 1562, (1963), and "Role of Phenolic Tackifiers in Polyisoprene Rubber," by F. L. Mangus and G. R. Hamed, Rubber Chemistry and Technology, Vol. 64, Pages 65 through 73 (1991).

The amount of tackifying agent, when utilized, is typically from 1 to 30, desirably from 2 to 15, and preferably from 6 to 10 phr.

The present invention relates to sulfur cure systems and include one or more cure accelerators in the adhesive cushion composition. Suitable amounts of sulfur and/or sulfur donor-type compounds generally range from 1 to t 10 and preferably from 2 to 4 phr. The amounts of sulfur vulcanization accelerator generally range from 0.2 to 4 and preferably from 0.5 to 2.0 phr. Various sulfur accelerators can be used such as aldehyde-amine accelerators, e.g., the reaction product of butyraldehyde and aniline, amines such as hexamethylenetetramine, guanidines such as diphenylguanidine, thioureas, sulfenamides, and the like. Activators such as zinc oxide, stearic acid, litharge, magnesia and amines can also be used in conventional amounts to attain good crosslinking efficiency, such as in amounts of from 0.5 to 15 and preferably from 1 to 5 or 10 phr. Various oils such as naphthenic oils are commonly utilized in suitable amounts such as from 1 to 30 and desirably from 4 to 20 phr.

The solventless cushion layer can also include conventional amounts of various known rubber compounding ingredients such as processing aids, stabilizers, antidegradants, and the like. Suitable antioxidants include hindered phenols, amines, amino phenols, hydroquinones, alkyldiamines, amine condensation products and the like.

The uncured rubber cushion layer can be vulcanized by heat or radiation according to any conventional vulcanization process. Typically, the vulcanization is conducted at a temperature ranging from 100°C to 180°C, alternately from 120°C to 170°C for a time period ranging from 1 to 300 minutes. The tire carcass, or casing, (also precured tread if used) being retreaded, having been previously been vulcanized, requires no additional vulcanization.

The present invention can be utilized to form a laminated retreaded tire for various types of vehicle tires such as passenger car tires, light and medium truck tires, off the road tires, and preferably is utilized in forming retreaded laminates for aircraft and medium truck tires.

Suitable tire tread compositions can be prepared by using conventional mixing techniques including, e.g., kneading, roller milling, extruder mixing, internal mixing (such as with a Banbury® mixing), etc. The sequence of mixing and temperatures employed are well known to skilled rubber compounders, the objective being the dispersion of fillers, activators, curatives in the polymer without excessive heat buildup.

The carcass cushion layer used in this invention in addition to forming retreaded tires, can generally be utilized to form a laminate between a tire tread and tire carcass casing when a good heat resistant, good blow-out protection (reduction or elimination of small internal voids formation within the rubber composition) is desired.

The following examples serve to illustrate the invention in detail. The amounts, or parts, are by weight unless otherwise indicated.

### EXAMPLE I

Rubber samples, representative of for tire cushion layer compositions to be positioned between a buffed tire rubber carcass and a rubber tire tread, are prepared as a black colored Control Sample A in a manner of the black colored cushion layer illustrated in the aforesaid US-A-5,503,940, and Sample B representing a non-black, white colored cushion rubber composition of this invention. Ingredients for the respective Samples are illustrated in the following Table 1.

**Table 1**

| Material | Control Sample A | Sample B |
|---|---|---|
| First Non-Productive Mixing | | |
| Polybutadiene rubber¹ | 60 | 60 |
| Natural rubber² | 40 | 40 |
| Carbon black³ | 50 | 0 |
| Titanium dioxide, rutile | 0 | 5 |
| Silica⁴ | 0 | 25 |
| Coupling agent⁵ | 0 | 2 |
| Processing oils | 6.5 | 6.5 |
| Stearic acid | 1 | 0 |
| Zinc oxide | 3.0 | 3.5 |
| Antidegradants⁶ | 2.5 | 2.5 |
| Octadedanoic acid | 1 | 1 |
| Tackifying resin7 | 8 | 8 |
| Bis-amide⁸ | 1.5 | 0 |

| Second Non-Productive Mixing | | |
|---|---|---|
| Silica⁴ | 0 | 25 |
| Coupling agent⁵ | 0 | 2 |

| Productive mixing | | |
|---|---|---|
| Sulfur | 3 | 3.5 |
| Accelerators (curing aids)⁹ | 4.5 | 6.7 |

| | | |
|---|---|---|
| ¹Cis-1,4-polybutadiene as BUD1208^{™} from The Goodyear Tire & Rubber Company having high cis 1,4- content. ²Cis-1,4-polyisoprene natural rubber (SMR-20) ³N550, an ASTM designation ⁴Precipitated silica as HiSil^{™} 243LD from PPG Industries Inc. ⁵A liquid silica coupling agent as a bis(3-triethoxysilylpropyl) polysulfide having an average of 2.2 connecting sulfur atoms in its polysulfide bridge as Si266^{™} from Degussa AG. ⁶Of the paraphenylene diamine type ⁷Phenol-formaldehyde type tackifying resin obtained as SP-1068 Resin^{™} from the Schenectady Company ⁸N,N'-m-xylene bis-citraconic imide as Perkalink^{™} 900 from the Flexsys B.V. Company. ⁹Accelerators as sulfenamide and diphenylguanidine types | | |

### EXAMPLE II

A tire is prepared by application of an uncured, tacky, non-black, white colored circumferential rubber cushion layer of a rubber composition of Sample B of Example I herein to a cured tire rubber carcass from which its tread has been buffed away.

Over the cushion layer is applied a cured rubber tread strip.

The resulting tire assembly is placed in a suitable envelope (a well known method of retreading to those having skill in such art) where the tire assembly is cured under conditions of elevated temperature (e.g. 170°C) and time to form a cured, retreaded tire.

The cushion layer acted as an intermediate transition laminate positioned between the uncured circumferential tire carbon black reinforced rubber tread and the buffed supporting toroidal shaped pneumatic tire cured carbon black reinforced rubber carcass, wherein said uncured rubber cushion provided an adhesive bond between said circumferential tire tread and supporting tire carcass.

The non-black, white colored intermediate transition rubber cushion laminate, by the nature of its non-black color, provided a color based monitoring means for controlling a subsequent abrading away of said cured rubber tread and at least a portion of said cushion laminate.

In such manner, the resulting tire is then retreaded buy the steps of:
(A) mounting said cured tire assembly on a suitable apparatus for rotation about its center axis;
(B) inflating the tire with air under pressure greater than ambient atmospheric pressure;
(C) abrading away the tire tread and a portion of said intermediate cushion rubber laminate layer while rotating said tire about its axis and applying a grinding wheel against the tread and then the cushion layer;
(D) wherein said abrading away of the intermediate cushion rubber laminate layer is accomplished by controlling the degree of its abrasive removal by monitoring the presence of its white color by a color-sensing apparatus to control the extent of its abrasive removal to thereby prevent its complete removal from said tire carcass;
(E) application of an uncured, tacky, non-black, white colored rubber cushion layer of a rubber composition of Sample B of Example I herein to said remaining cured cushion laminate layer to re-create an intermediate cushion layer over which is applied an uncured circumferential carbon black reinforced rubber tread wherein said uncured cured rubber cushion provides an adhesive bond between said circumferential tire tread and supporting tire carcass, followed by:
(F) curing said prepared tire assembly at an elevated temperature in a suitable mold to form said retreaded tire.

## Claims

1. A method of retreading a cured pneumatic rubber tire, the method comprising the steps of:
(A) mounting said cured pneumatic tire (1) comprising a black colored circumferential rubber tread (2A), a non-black-colored rubber carcass cushion layer (4A) underlying said tread (2A), a and black colored tire rubber carcass (3) on an apparatus for rotation about its center axis;
(B) inflating the tire (1) with fluid, preferably air, under pressure greater than ambient atmospheric pressure;
(C) removing the entire circumferential tire tread (2A) and partially removing a portion of said non-black colored carcass cushion layer (4A) while rotating said tire (1) about its axis;
(D) wherein the extent of said partial removal of said carcass cushion rubber layer (4A) is controlled by a combination of detecting the presence of the non-black color thereof by a color-sensing means (8) and monitoring the extent of its removal to thereby prevent its complete removal from said tire carcass (3);
(E) applying an additional uncured, tacky, non-black colored rubber carcass cushion layer (4) to the radially outer surface of said partial remaining cured carcass cushion layer (4A) on said tire carcass (3) to form a built-up carcass cushion layer dual laminae comprising a laminate of said uncured cushion layer (4) over said cured carcass cushion layer (4A);
(F) applying an uncured or cured circumferential carbon black reinforced, black colored rubber tread (2) to the radially outer surface of said uncured non-black colored carcass cushion layer (4) of said carcass cushion layer dual laminae to form a tire assembly followed by:
(G) curing said prepared tire assembly at an elevated temperature in a mold to form a retreaded tire.

2. The method of claim 1, wherein said non-black colored cushion layer (4, 4A) is a laminate not being co-extruded with said tire tread.

## Patentansprüche

1. Verfahren zur Runderneuerung eines vulkanisierten Gummiluftreifens, wobei das Verfahren die Schritte umfasst des:
(A) Montierens des vulkanisierten Luftreifens (1), der einen schwarzgefärbten umfangsgerichteten Gummilaufstreifen (2A), eine unter diesem Laufstreifen (2A) liegende, nicht schwarzgefärbte Gummikarkassenpuffermaterialschicht (4A) und eine schwarzgefärbte Reifen-Gummikarkasse (3) umfasst, auf einer Vorrichtung zum Drehen um seine Mittelachse;
(B) Aufpumpens des Reifens (1) mit Fluid, bevorzugt Luft, unter Druck, der größer als der atmosphärische Umgebungsluftdruck ist;
(C) Entfernens des gesamten umfangsgerichteten Reifenlaufstreifens (2A) und teilweise Entfernens eines Teils der nicht schwarzgefärbten Karkassenpuffermaterialschicht (4A), während der Reifen (1) um seine Achse gedreht wird;
(D) wobei das Ausmaß des teilweisen Entfernens der Karkassenpuffermaterialgummischicht (4A) durch eine Kombination des Erfassens des Vorhandenseins von deren nicht-schwarzer Farbe durch ein Farberfassungsmittel (8) und des Überwachens des Ausmaßes ihres Entfernens gesteuert wird, um **dadurch** ihr vollständiges Entfernen von der Reifenkarkasse (3) zu verhindern;
(E) Anbringens einer zusätzlichen, unvulkanisierten, klebrigen, nicht schwarzgefärbten Kautschuk-Karkassenpuffermaterialschicht (4) an der radial äußeren Fläche der teilweise verbleibenden vulkanisierten Karkassenpuffermaterialschicht (4A) auf der Reifenkarkasse (3) zur Bildung einer aufgebauten Karkassenpuffermaterialschicht-Doppellage, die ein Laminat der unvulkanisierten Puffermaterialschicht (4) über der vulkanisierten Karkassenpuffermaterial-schicht (4A) umfasst;
(F) Anbringens eines unvulkanisierten oder vulkanisierten, umfangsgerichteten, Carbon Blackverstärkten, schwarzgefärbten Kautschuklaufstreifens (2) an der radial äußeren Fläche der unvulkanisierten, nicht schwarzgefärbten Karkassenpuffermaterialschicht (4) der Karkassenpuffermaterialschicht-Doppellage, um eine Reifenbaugruppe zu bilden, gefolgt durch:
(G) Vulkanisieren der vorbereiteten Reifenbaugruppe auf einer erhöhten Temperatur in einem Formwerkzeug, um einen runderneuerten Reifen zu bilden.

2. Verfahren nach Anspruch 1, wobei die nicht schwarzgefärbte Puffermaterialschicht (4, 4A) ein Schichtstoff ist, der nicht mit dem Reifenlaufstreifen coextrudiert wird.

## Revendications

1. Procédé pour le rechapage d'un bandage pneumatique en caoutchouc vulcanisé, le procédé comprenant les étapes consistant à :
(A) monter ledit bandage pneumatique vulcanisé (1) comprenant une bande de roulement circonférentielle en caoutchouc colorée en noir (2A), une couche de rembourrage de carcasse en caoutchouc non colorée en noir (4A) sous-jacente à ladite bande de roulement (2A), et une carcasse de bandage pneumatique en caoutchouc colorée en noir (3), sur un appareil à des fins de rotation autour d'un axe central de ce dernier ;
(B) gonfler le bandage pneumatique (1) avec un fluide, de préférence de l'air, sous une pression supérieure à la pression atmosphérique ambiante ;
(C) retirer la bande de roulement circonférentielle totale du bandage pneumatique (2A) et retirer en partie une portion de ladite couche de rembourrage de carcasse non colorée en noir (4A) tout en faisant tourner ledit bandage pneumatique (1) autour de son axe ;
(D) dans lequel l'étendue dudit retrait partiel de ladite couche de caoutchouc de rembourrage de carcasse (4A) est contrôlée par une combinaison de la détection de la présence de sa couleur non noire par un moyen de détection de couleur (8) et de la surveillance de l'étendue de son retrait, pour ainsi empêcher son retrait complet de ladite carcasse du bandage pneumatique (3) ;
(F) appliquer une couche supplémentaire de remplissage de carcasse de caoutchouc non colorée en noir, collante, non vulcanisée (4) sur la surface externe en direction radiale de ladite couche de rembourrage de carcasse vulcanisée (4A) subsistant en partie sur ladite carcasse de bandage pneumatique (3) pour former un stratifié constitué par une double couche de rembourrage de carcasse, comprenant un stratifié de ladite couche de rembourrage non vulcanisée (4) pardessus ladite couche de rembourrage de carcasse vulcanisée (4A) ;
(F) appliquer une bande de roulement en caoutchouc colorée en noir (2) circonférentielle, non vulcanisée ou vulcanisée, renforcée par du noir de carbone, sur la surface externe en direction radiale de ladite couche de rembourrage de carcasse non vulcanisée non colorée en noir (4) dudit stratifié constitué par une double couche de rembourrage de carcasse pour former un assemblage de bandage pneumatique, ladite application étant suivie :
(G) d'une vulcanisation dudit assemblage préparé de bandage pneumatique à une température élevée dans un moule pour obtenir un bandage pneumatique rechapé.

2. Procédé selon la revendication 1, dans lequel ladite couche de rembourrage non colorée en noir (4, 4A) est un stratifié qui n'est pas coextrudé avec ladite bande de roulement de bandage pneumatique.
